# EUROPÄISCHE PATENTSCHRIFT

(11) **EP 3 170 721 B1**
(45) Veröffentlichungstag und Bekanntmachung des Hinweises auf die Patenterteilung: **08.01.2020**
(21) Anmeldenummer: 16197466.2
(22) Anmeldetag: 07.11.2016
(51) Int. Cl.: B62D 33/04, B60J 5/10

(54) **SPRIEGELKONSTRUKTION, AUFBAU FÜR NUTZFAHRZEUGE, WECHSELBRÜCKE, UND NUTZFAHRZEUG MIT AUFBAU**
ROOF ARCH STRUCTURE, STRUCTURE FOR COMMERCIAL VEHICLES, SWAP BRIDGES, AND COMMERCIAL VEHICLE WITH BODY
STRUCTURE DE RIDELLE, CARROSSERIE POUR VÉHICULES UTILITAIRES, PONT AMOVIBLE ET VÉHICULE UTILITAIRE COMPRENANT LA CARROSSERIE

(30) Priorität: 18.11.2015 DE 102015119907
(43) Veröffentlichungstag der Anmeldung: 24.05.2017
(73) Patentinhaber: Kögel Trailer GmbH, 89349 Burtenbach (DE)
(72) Erfinder: BROLL, Tobias, 86381 Krumbach-Billenhausen (DE); KALISCHKO, Thomas, 86470 Thannhausen (DE)
(74) Vertreter: Kilchert, Jochen

(56) Entgegenhaltungen:
- EP-A1- 0 132 103
- EP-A1- 2 619 023
- EP-A2- 1 136 292
- EP-A2- 2 151 370
- DE-T1- 741 070
- DE-U1- 29 808 621
- US-A- 3 741 561

## Beschreibung

Die Erfindung betrifft eine Spriegelkonstruktion, einen Nutzfahrzeugaufbau, eine Wechselbrücke und Nutzfahrzeuge mit einem Aufbau.

Unter dem Begriff "Spriegel" ist eine Unterkonstruktion für eine Plane als Abdeckung für Ladungen, insbesondere ein Bügel für ein Wagenverdeck, zu verstehen. Spriegel werden z.B. bei oder Nutzfahrzeugen wie Lastkraftwägen (LKW) oder deren Aufbauten und Anhängern verwendet. Spriegel verleihen einer Plane eine bestimmte Form und verhindert, dass sich z.B. Regenwasser darauf ansammelt. Ein Spriegel kann eine gebogene Form haben oder als eine gerade Strebe gebildet sein. Eine Plane wird meist aus einem wasserabweisenden Stoff wie z.B. Kunststoff (z.B. PVC - Abkürzung für Polyvinylchlorid), während ein Spriegel unter anderem aus Holz, einem Leichtmetall wie z.B. Aluminium oder einer Metall-Legierung hergestellt wird.

Unter dem Begriff "Wechselbrücke", auch als "Wechselaufbau" bekannt, ist ein austauschbarer Ladungsträger zu verstehen, der sich von einem LKW trennen lässt und einem Container ähnlich ist. Gleichzeitig können Wechselbrücken auch für den Schienenverkehr geeignet sein und auf Anhängern, Aufliegern und Güterwaggons transportiert werden. Wechselbrücken besitzen in der Regel herausfahrbare Stützbeine, auf denen die Wechselbrücke im Stand und getrennt von etwaigen Schienen- oder Straßenfahrzeugen bzw. -anhängern positioniert werden können. In diesem Stand kann ein Auflieger eines LKW unter die Wechselbrücke rangiert werden, um die Wechselbrücke aufzunehmen und anschließend zu transportieren.

Die Beladung, insbesondere die Beladungshöhe, von LKW, insbesondere deren Aufbauten, oder von ähnlichen Ladungsträgern wird durch Spriegel - in der Regel auf 3m - begrenzt. Um die Ladungshöhe vollständig auszunutzen, können die Spriegel pneumatisch oder elektrisch angehoben werden, um das Beladen von aufpalettierten Gütern oder von Gütern mit einer Höhe von 3m bzw. von etwa der Ladefläche bis unter die Spriegel zu erleichtern. Die Beladung kann von der Seite oder vom Heck des Ladungsträgers erfolgen. Hierzu muss an der entsprechenden Seite die Plane von Befestigungsmitteln gelöst und entfernt bzw. verschoben werden, damit die die Plane tragenden Spriegel angehoben werden können. Damit beim seitlichen Beladen eines Ladungsträgers nicht zusätzlich die Heckplane geöffnet bzw. gelöst werden muss, kann der Heck- bzw. Endspriegel mehrteilig aufgebaut sein. Dabei trägt ein erster Teil die Heckplane und ein anderer, zweiter Teil die Dach/Top-Plane sowie die Seitenplane. Beim Anheben der Spriegel zur seitlichen Beladung wird lediglich der zweite Teil des Endspriegels angehoben, während der erste Teil des Endspriegels an seiner Position verharrt und die Heckplane nicht gelöst werden muss. Der erste Teil wird dabei im Wesentlichen durch die Befestigung an die Heckabdeckung in seiner Position gehalten, um nicht von den Ecksäule der Wechselbrücke oder einem ähnlichen Ladungsträger herunterzufallen.

Bei einer Heckbeladung eines Ladungsträgers ergibt sich bei einem mehrteiligen Endspriegel das Problem, dass beide Teile angehoben werden müssen. Da allerdings die beiden Teile normalerweise aufeinander liegen und nicht fest miteinander verbunden sind, besteht die Gefahr, dass eines der Teile (abhängig davon, welches Teil stets mit dem Hebemechanismus in Kontakt ist) sich beim Anheben des mehrteiligen Endspriegels von dem anderen Teil löst und nach dem Einladen und Verschließen der Heckplane per Hand an seine vorbestimmte Position bewegt und angeordnet werden muss. Dies kostet Zeit und ist auf Grund der Höhe des Ladungsträgers meist nur mit zusätzlichen Hilfsmitteln wie einer Leiter möglich. Zusätzlich besteht die Gefahr, dass sich der zweite Teil des Endspriegels vollständig vom Ladungsträger löst und/oder herunterfällt und dabei Personal schwer verletzen kann. Eine Spriegelkonstruktion nach dem Oberbegriff von Anspruch 1 ist durch die EP1136292 offenbart.

Es ist daher die Aufgabe der vorliegenden Erfindung, eine mehrteilige Spriegelkonstruktion dahingehend weiterzubilden, die zuvor genannten Probleme zu lösen bzw. zu überwinden. Insbesondere sollte die Handhabbarkeit einer derartigen Spriegelkonstruktion vereinfacht und die Verletzungsgefahr bei jeder Verwendung des mehrteiligen Endspriegels soweit wie möglich gebannt werden.

Diese Aufgabe wird durch eine Spriegelkonstruktion mit den Merkmalen des Patentanspruchs 1 gelöst. Insbesondere wird die Aufgabe durch eine Spriegelkonstruktion zum Tragen und Anheben von Abdeckungen bei Nutzfahrzeugen, Containern und/oder Anhängern, mit einem ersten Spriegel zum Verbinden mit einer Heckabdeckung und/oder einer Hecktürvorrichtung und mit einem zweiten auf dem ersten Spriegel anordbaren Spriegel zum Tragen einer Top-Abdeckung, gelöst. Dabei weist die Spriegelkonstruktion mindestens eine Kopplungseinrichtung zum Koppeln des ersten Spriegels mit dem zweiten Spriegel auf. Die Kopplungseinrichtung selbst weist einen Kopplungsriegel und eine Kopplungsaufnahme auf, wobei der Kopplungsriegel mit einer Aktivierungseinrichtung zum Verriegeln und Entriegeln des Kopplungsriegels mit/von der Kopplungsaufnahme ausgebildet ist und wobei der zweite Spriegel (4) derart ausgebildet ist, dass dabei die Außenfläche des ersten Spriegels (2) vollständig abgedeckt ist.

Diese Spriegelkonstruktion hat den Vorteil, dass stets eine Kopplungseinrichtung vorhanden ist und nicht separat an den Spriegel montiert werden muss. Dadurch wird ein Benutzer davon entbunden, notwendige Befestigungsmittel mit sich zu führen und anzubringen, wenn die Spriegelkonstruktion für eine Heckbeladung angehoben werden muss. Zusätzlich ist die Verbindung des Riegels mit der Aufnahme und somit des ersten Spriegels mit dem zweiten Spriegel durch z.B. ein Verschieben des Riegels in und aus der Aufnahme einfach herzustellen und wieder zu lösen. Das Verriegeln und Entriegeln erfolgt durch die Aktivierungseinrichtung, weshalb ein Benutzer nicht eigenständig den Riegel betätigen und insbesondere verschieben muss. Der Benutzer wird somit auch davon entbunden, in die sachgemäße Verriegelung und Entriegelung eingewiesen werden zu müssen, da diese Funktionen durch die Aktivierungseinrichtung durchgeführt werden. Eine Fehlbedienung der Kopplungseinrichtung und eine dadurch einhergehende Unfallgefahr kann ebenfalls mit hoher Wahrscheinlichkeit ausgeschlossen werden.

Vorzugsweise ist der Kopplungsriegel mit dem ersten Spriegel verbunden und die Kopplungsaufnahme am zweiten Spriegel ausgebildet. Mittels dieser Trennung und Anordnung der Elemente der Kopplungseinrichtung ergibt sich der Vorteil, dass der Riegel z.B. an der Innenseite des ersten Spriegels und somit innerhalb der Wechselbrücke angeordnet ist oder z.B. an der Außenseite des ersten Spriegels angeordnet ist und somit von dem zweiten Spriegel verdeckt wird. In derartigen Ausführungsformen ist ein Zugang zu dem Riegel von außen nicht möglich und eine Manipulation der Kopplungseinrichtung kann unterbunden werden. Ein weiterer Vorteil besteht darin, dass beim Anheben des entkoppelten zweiten Spriegels weder der Riegel noch dessen Aktivierungseinrichtung mit angehoben wird. Dadurch wird das anzuhebende Gewicht vermindert und unter anderem die Aktivierungseinrichtung nicht beeinflusst. Alternativ oder zusätzlich kann in anderen Ausführungsformen der Riegel mit dem zweiten Spriegel verbunden und die Aufnahme im ersten Spriegel ausgebildet sein.

In einer weiteren vorteilhaften Ausführungsform ist die Aktivierungseinrichtung durch das Öffnen und Schließen der Heckabdeckung und/oder der Hecktürvorrichtung steuerbar. Dadurch wird die Steuerung der Kopplungseinrichtung/en mit dem Öffnen und Schließen des Hecks des Ladungsträgers verkuppelt.

Vorteilhafterweise verriegelt ein Öffnen der Heckabdeckung die mindestens eine Kopplungseinrichtung und entriegelt ein Schließen der Heckabdeckung die mindestens eine Kopplungseinrichtung. Daraus ergibt sich der Vorteil, dass für eine Heckbeladung, für die verständlicherweise die Heckabdeckung geöffnet werden muss, die Spriegelkonstruktion auf Grund der Verriegelung der Kopplungseinrichtung gleichzeitig bereit ist, angehoben zu werden.

In einer weiteren vorteilhaften Ausführungsform weist der erste Spriegel zusätzlich mindestens einen Durchbruch zum Aufnehmen der Kopplungsaufnahme auf. Damit geht der Vorteil einher, dass der zweite Spriegel auf dem ersten Spriegel an einer vorbestimmten Stelle/Position angeordnet und eine Fehlverriegelung auf Grund einer ungenauen Positionierung verhindert wird. Der Durchbruch, auch als Ausnehmung oder Loch bezeichnet, ist derart gestaltet, dass die Kopplungsaufnahme beim Absenken des zweiten Spriegels auf den ersten Spriegel ohne zusätzliche bzw. hierfür notwendige Führungsmittel in den Durchbruch eingeführt wird. Zusätzlich oder alternativ kann die Aufnahme und/oder der Durchbruch ein derart sich verjüngende Form aufweisen, die der Aufnahme mehr Spielraum und/oder eine sichere Führung beim Einsetzten in den Durchbruch erlaubt.

Es hat sich ebenfalls als vorteilhaft herausgestellt, wenn der Kopplungsriegel an einer Unterseite des ersten Spriegels angeordnet ist. Da auf der Oberseite des ersten Spriegels der zweite Spriegel angeordnet ist, wird die Funktion des Riegels durch dessen Platzierung an der Unterseite des ersten Spriegels nicht behindert. Außerdem ist von der Ladefläche aus für einen Benutzer leicht erkennbar, ob der Kopplungsriegel mit der Kopplungsaufnahme in Eingriff ist oder nicht, d.h. die beiden Spriegel miteinander verriegelt bzw. verkoppelt sind oder nicht.

Vorzugsweise weist die Aktivierungseinrichtung ein Federelement zum Verriegeln des Kopplungsriegels mit der Kopplungsaufnahme und ein Zugseil zum Entriegeln des Kopplungsriegels aus der Kopplungsaufnahme auf. Daraus ergibt sich der Vorteil, dass die Spriegelkonstruktion durch die Kopplungseinrichtung im Fall, wenn keine äußere Einflussnahme durch einen Benutzer erfolgt, immer verriegelt ist und der eine Spriegel sich nicht von dem anderen Spriegel lösen bzw. vom Ladungsträger herunterfallen kann. Das Federelement übt hierbei eine Kraft auf den Kopplungsriegel aus, die den Riegel in der Aufnahme verharren lässt. Erst durch eine entgegen der Federkraft und auf das Zugseil wirkende Zugkraft wird der Riegel aus der Aufnahme gezogen und der zweite Spriegel vom ersten Spriegel entkoppelt. Eine derartige Zugkraft wird zu einem Zeitpunkt und über geeignete Mittel ausgeübt, wenn z.B. die Heckplane/-abdeckung und/oder Hecktürvorrichtung verschlossen ist. Ein Anheben der kompletten Spriegelkonstruktion für eine Heckbeladung ist in diesem Zustand nicht vorgesehen und könnte ansonsten die Heckabdeckung/-türvorrichtung zerreißen bzw. beschädigen.

In einer weiteren vorteilhaften Ausführungsform sind zwei spiegelsymmetrisch angeordnete Kopplungseinrichtungen ausgebildet, wobei das eine Ende des Zugseils mit dem einen Kopplungsriegel und das andere Ende des Zugseils mit dem anderen Kopplungsriegel verbunden ist. Das bedeutet, dass ein und dasselbe Zugseil mit den beiden Riegeln verbunden ist. Um eine Zugkraft auf beiden Riegeln gleichzeitig auszuüben, muss das Zugseil lediglich in eine Richtung ausgelenkt bzw. gezogen werden, die nicht auf einen der Riegel gerichtet ist. Vorzugsweise wird das Zugseil senkrecht nach unten ausgelenkt. Durch die zwei Kopplungseinrichtungen ergibt sich der Vorteil, dass die beiden Spriegel verdreh- und kippsicher miteinander verriegelt sind. Die Verwendung eines einzigen Zugseils hat den Vorteil, dass die beiden Kopplungseinrichtungen durch den Einsatz einer Zugkraft gleichzeitig verriegelt bzw. entriegelt werden können. Dadurch wird Spriegelkonstruktion vereinfacht und auf Grund der geringeren Anzahl an mitwirkenden Mitteln kostengünstiger und weniger Fehler anfällig.

Vorzugsweise ist das Zugseil zusätzlich derart ausgebildet, dass mindestens im gespannten und nicht ausgelenkten Zustand die Kopplungsriegel mit den jeweiligen Kopplungsaufnahmen verriegelt sind. Daraus ergibt sich der Vorteil, dass jede Auslenkung des Zugseils zu einer Entriegelung der Kopplungseinrichtungen führt.

Als vorteilhaft hat sich ebenfalls herausgestellt, wenn das Zugseil mit einem zweiten Zugelement verbunden ist, wobei das zweite Zugelement, z.B. in der Form eines Seils, derart ausgebildet ist, mindestens vom ersten Spriegel bzw. vom ersten Zugseil bis auf Benutzergreifreichweite herunterzureichen. Dadurch kann ein Benutzer vom Boden aus steuern, ob eine Zugkraft auf das Zugseil wirken und somit das Zugseil ausgelenkt werden soll oder nicht. Letztendlich zieht oder lockert der Benutzer das Zugelement, um die Kopplungseinrichtungen zu entriegeln oder zu verriegeln. Damit wird eine Steuerung der Aktivierungseinrichtung erleichtert und bedarf keiner für einen Benutzer üblichen Hilfsmittel wie z.B. einer Leiter. Alternativ zu dem Zugelement als Seil kann auch ein elektrisch gesteuerter Motor mit einem Steuernocken verwendet werden, der eine Auslenkung auf das zwischen den Kopplungsriegeln gespannte Zugseil ausüben kann, um die Kopplungseinrichtungen zu entriegeln. Der Motor, insbesondere der Steuernocken, ist direkt an dem Zugseil und insbesondere an dem ersten Spriegel angeordnet ist. Durch die elektrische Steuerung der Verriegelung und der Entriegelung wird die Handhabung der Spriegelkonstruktion für Benutzer zusätzlich vereinfacht.

Bei dem erfindungsgemäßen Endspriegel, auch als Spriegelkonstruktion bezeichnet, können der erste und zweite Spriegel als eigenständige Spriegel und/oder als Teile des Endspriegels betrachtet werden. Dies liegt daran, dass der erste und zweite Spriegel einerseits eigenständige Aufgaben und Funktionen haben und andererseits als Verbund einen Endspriegel vollständig beschreiben. In einer weiteren Ausführungsform, insbesondere für Hecktürvorrichtungen, wird die Aktivierungsvorrichtung einer Kopplungseinrichtung durch eine Zahnstange gebildet, die mit dem Kopplungsriegel verbunden ist. An den drehbaren Türachsen einer Wechselbrücke, Aufbau oder Containers sind zahnradförmige Elemente ausgebildet, die im geschlossenen Zustand der Tür/-vorrichtung mit der Zahnstange in Eingriff sind und den Riegel aus der Aufnahme verfahren bzw. geschoben haben. Beim Öffnen der Tür wird der Riegel in die Aufnahme verfahren. Zusätzlich kann das Zahnrad derart ausgebildet sein, dass es den Kontakt zu dem Zahnrad verliert, damit beim Anheben oder Absenken des ersten Spriegels der Eingriff mit dem Zahnradelement kein Hindernis bildet. Wenn es sich bei der Heckabdeckung um eine Heckplane handelt, ist das Zahnradelement vorzugsweise stets am ersten Spriegel angeordnet. Zusätzlich ist das Zahnradelement mit einer Vorspannfeder ausgestattet, dass die Zahnstange und somit den Riegel in die Verriegelungsposition bringt. Mit einem entsprechenden Zugelement wird eine entgegen der Vorspannfeder wirkende Kraft ausgeübt und der Riegel in die Entriegelungsposition gebracht.

Ebenso wird die zuvor genannte Aufgabe durch einen Aufbau oder eine Wechselbrücke für Nutzfahrzeuge mit jeweils einer erfindungsgemäße Spriegelkonstruktion gelöst. Auch ein Nutzfahrzeug mit einem derartigen Aufbau bzw. einer derartigen Wechselbrücke dient der Lösung der hierin gestellten Aufgabe.

Nachfolgend wird die Erfindung anhand von einem Ausführungsbeispiel beschrieben, das mittels der Abbildungen näher erläutert wird.

Hierbei zeigen:
- Fig. 1: eine perspektivische Ansicht auf eine Wechselbrücke;
- Fig. 2: eine Außenseitenansicht auf eine erfindungsgemäße Spriegelkonstruktion;
- Fig. 3: eine Außenseitenansicht auf den ersten Spriegel der erfindungsgemäßen Spriegelkonstruktion (ohne den zweiten Spriegel);
- Fig. 4: eine Innenseitenansicht auf den ersten Spriegel der erfindungsgemäßen Spriegelkonstruktion;
- Fig. 5: eine Kopplungseinrichtung der erfindungsgemäßen Spriegelkonstruktion;
- Fig. 6: eine Ansicht auf ein gespanntes Zugseil einer Aktivierungseinrichtung der erfindungsgemäßen Spriegelkonstruktion;
- Fig. 7: eine Ansicht auf die Außenseite des Hecks der Wechselbrücke mit verschlossener Heckplane;
- Fig. 8: eine Ansicht auf die Innenseite des Hecks der Wechselbrücke mit verschlossener Heckplane; und
- Fig. 9: eine Ansicht auf die Innenseite der erfindungsgemäßen Spriegelkonstruktion mit verschlossener Heckplane.

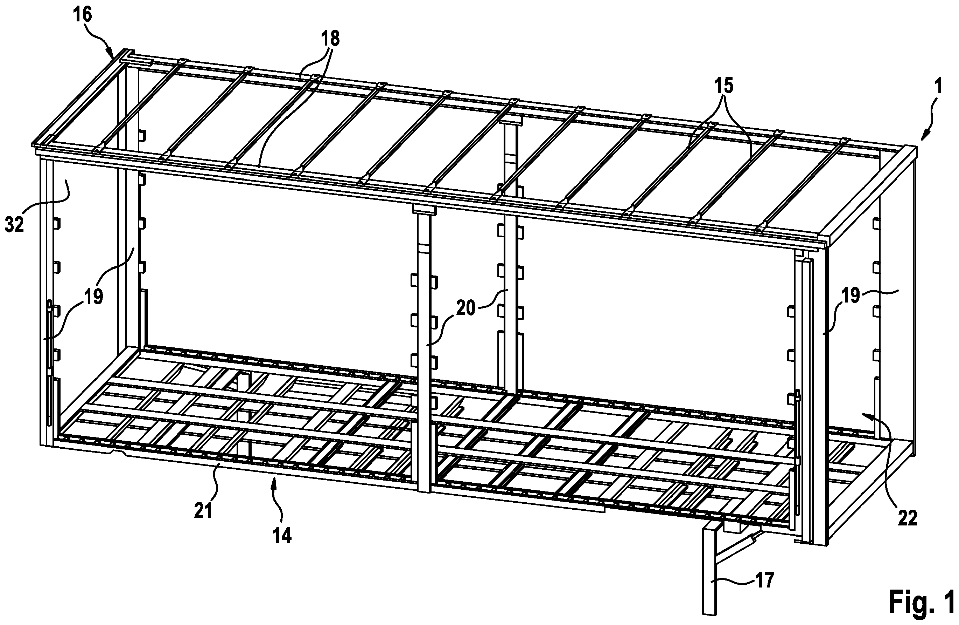

Fig. 1 zeigt eine Wechselbrücke 14 mit einem Boden bzw. Rahmen 21, zwei in den Boden einsetzbaren Rungen 21, zwei Rungen 20, vier Ecksäulen 19, zwei Spriegelträgern 18, vier Stützbeinen 17 (nur eines ist in der Figur sichtbar), einer Vielzahl von Dachspriegeln 15, zwei Endspriegeln 1, 16 und einer an einem der Endspriegel befestigten Heckplane 3. Die Wechselbrücke 14 hat die Form und/oder die Größe eines ISO-Containers. Der Boden 21 dient als Auflagefläche für die zu transportierenden Güter und kann mit zusätzlichen Holzplanken ausgekleidet sein. Die Ecksäulen 19 bezeichnen die Seitenkanten der Wechselbrücke und dienen als Halterung für die Endspriegel 1, 16, die Spriegelträger 18, Heck-/Seiten-/Dachplanen 3 sowie für Seitenbalken (nicht in der Figur sichtbar), die zwischen Säule und Runge 20 angebracht und angeordnet werden. Die in den Boden 21 eingesetzten Rungen 20 halten die genannten Seitenbalken, die als Seitenbegrenzung für aufgeladene Güter und/oder für Seitenplanen dienen. Die parallel zueinander angeordneten Dachspriegel 15 sind zwischen den Spriegelträgern 18 befestigt, aber gegebenenfalls entlang der Träger 18 verschiebbar. Am Heckladezugang 22 ist die erfindungsgemäße Spriegelkonstruktion als Endspriegel 1 ausgebildet und wird in den nachfolgenden Figuren näher erläutert. Gegenüber dem Heckladezugang 22, d.h. an der Vorderseite der Wechselbrücke 14, ist eine Vorderwand 33 zwischen dem Endspriegel 16, dem Boden 21 und zweier Ecksäulen 19 angeordnet.

Unter dem Begriff "Spriegel", wie er für den vorliegenden Erfindungsgegenstand verwendet wird, ist eine Unterkonstruktion für eine Plane als Abdeckung für Ladungen, insbesondere ein Bügel für ein Wagenverdeck, zu verstehen. Spriegel werden z.B. bei Cabrios oder Nutzfahrzeugen wie Lastkraftwägen (LKW) oder deren Aufbauten und Anhängern verwendet. Spriegel verleihen einer Plane eine bestimmte Form und verhindert, dass sich z.B. Regenwasser darauf ansammelt. Ein Spriegel kann eine gebogene Form haben oder als eine gerade Strebe gebildet sein. Eine Plane wird meist aus einem wasserabweisenden Stoff wie z.B. Kunststoff, während ein Spriegel unter anderem aus Holz, einem Leichtmetall wie z.B. Aluminium oder einer Metall-Legierung hergestellt wird.

Unter dem Begriff "Wechselbrücke", auch als "Wechselaufbau" bekannt, wie er für den vorliegenden Erfindungsgegenstand verwendet wird, ist ein austauschbarer Ladungsträger zu verstehen, der sich von einem LKW trennen lässt und einem Container ähnlich ist. Gleichzeitig können Wechselbrücken auch für den Schienenverkehr geeignet sein und auf Anhängern, Aufliegern und Güterwaggons transportiert werden. Wechselbrücken besitzen in der Regel herausfahrbare Stützbeine, auf denen die Wechselbrücke im Stand und getrennt von etwaigen Schienen- oder Straßenfahrzeugen bzw. -anhängern positioniert werden können. In diesem Stand kann ein Auflieger eines LKW unter die Wechselbrücke rangiert werden, um die Wechselbrücke aufzunehmen und anschließend zu transportieren.

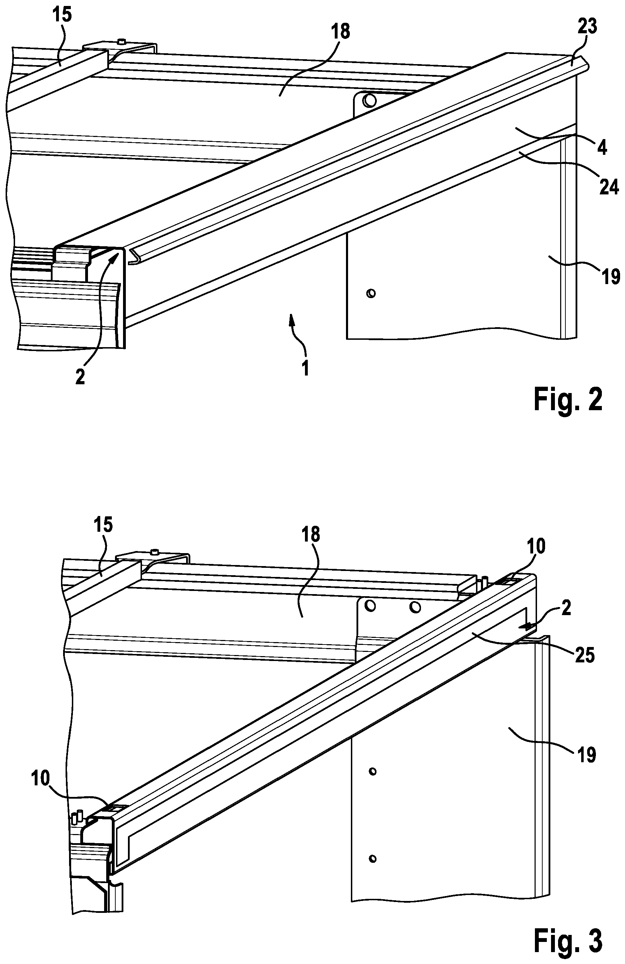

Fig. 2 zeigt eine Außenseitenansicht auf die erfindungsgemäße Spriegelkonstruktion 1, die auf und zwischen beiden Ecksäulen 19 am Heck angeordnet und befestigt ist. Der Endspriegel 1 wird durch einen ersten Spriegel 2 und einen zweiten auf dem ersten Spriegel angeordneten Spriegel 4 ausgebildet. Der erste Spriegel 2 dient der Befestigung einer Heckabdeckung, insbesondere einer Heckplane. Der zweite Spriegel dient dem Tragen einer Dachabdeckung, insbesondere einer Dachplane, sowie dem Mitanheben des ersten Spriegels 2, sobald diese miteinander verkoppelt sind. Dabei ist der zweite Spriegel 4 derart ausgebildet, dass dabei die Außenfläche des ersten Spriegels 2 vollständig abgedeckt wird. Der zweite Spriegel 4 hat eine rechtwinklige Form mit einer Oberfläche und einer Seitenfläche, die sich von der Spitze der Ecksäulen 19 des Hecks erstrecken. Der zweite Spriegel 4 weist entlang seiner Seitenfläche und von einem Rand zum gegenüberliegenden Rand eine Kederführungsschiene 23 und eine Dichtung bzw. einen Kantenschutz 24 auf.

Fig. 3 zeigt eine Außenseitenansicht auf den ersten Spriegel 2 der erfindungsgemäßen Spriegelkonstruktion 1 (ohne den zweiten Spriegel 4 aus Fig. 2). Der erste Spriegel 2 hat eine rechtwinklige Form mit einer Oberfläche und einer Seitenfläche, die sich von der Spitze der Ecksäulen 19 des Hecks erstrecken. An der oberen Fläche sind zwei Durchbrüche bzw. Löcher 10 ausgebildet, um Kopplungsaufnahmen (nicht gezeigt) des zweiten Spriegels aufzunehmen. An der Seitenfläche ist eine Befestigungsvorrichtung 25 für eine Heckplane angeordnet, wobei eine Heckplane (nicht gezeigt) im Wesentlichen zwischen der Befestigung 25 und der Seitenfläche eingeklemmt und eingespannt wird.

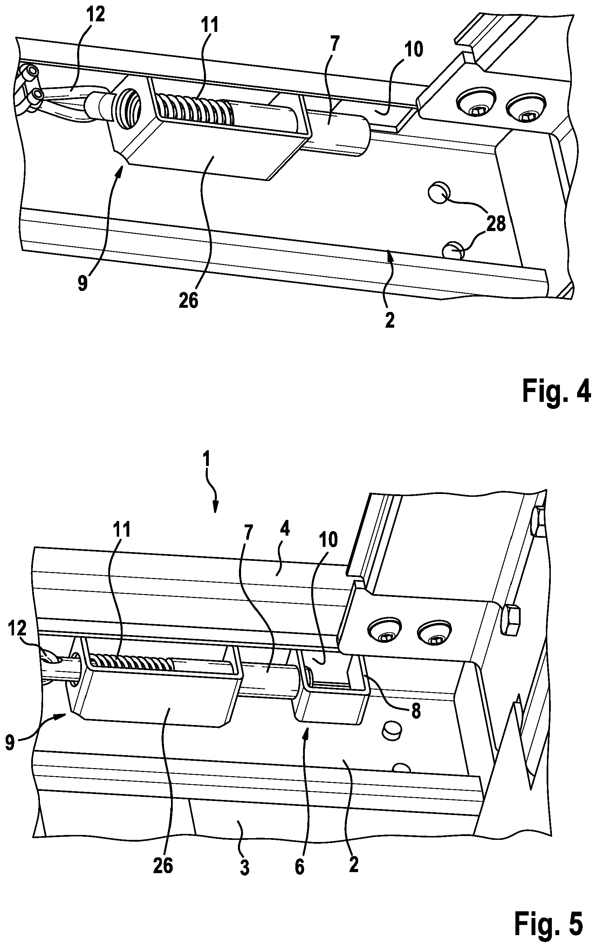

Fig. 4 zeigt eine Innenseitenansicht auf den ersten Spriegel 2 der erfindungsgemäßen Spriegelkonstruktion mit einem Kopplungsriegel 7, in Form eines Bolzens, einem Riegelführungsmittel 26, einer Aktivierungseinrichtung 9 sowie einem Durchbruch 10. An der Innenseite der Seitenfläche des ersten Spriegels 2 sind zwei Haltemittel der Heckplanenbefestigung zu sehen, die durch entsprechende Löcher im ersten Spriegel 2 durchgeführt und an der Innenseite befestigt worden sind. Die Aktivierungseinrichtung 9 weist ein an dem Kopplungsriegel 7 befestigtes Federelement 11 und ein Zugseil 12 auf. Durch das Ziehen des Zugseils 12 wird das Federelement zusammengedrückt und der Kopplungsriegel 7 aus der Kopplungsaufnahme (nicht gezeigt) entriegelt. Zur Führung ist der Kopplungsriegel 7 in einem Riegelführungsmittel 26 angeordnet, dass dem Riegel lediglich eine translatorische Bewegung erlaubt, durch die der Riegel in und aus der Kopplungsaufnahme verfahren werden kann. Der Durchbruch 10 ist rechteckig ausgebildet.

Fig. 5 zeigt im Wesentlichen die gleichen Elemente der Fig. 4, wobei diesmal der zweite Spriegel 4 der erfindungsgemäße Spriegelkonstruktion 1 auf dem ersten Spriegel 2 angeordnet und mit diesem verriegelt ist. Die Kopplungseinrichtung 6 mit dem Kopplungsriegel 7 und der Kopplungsaufnahme 8 sowie die Heckplane 3 unterhalb des ersten Spriegels 2 sind sichtbar. Die Kopplungsaufnahme 8 hat eine U-Form, die durch den Durchbruch 10 des ersten Spriegels 2 geführt wurde. An einer Seite der U-Form ist ein Loch, durch das der Kopplungsriegel 7 in die Aufnahme 8 gesteckt wurde und nun im Eingriff mit der Aufnahme 8 steht.

Dadurch wird die Kopplungseinrichtung 6 und insbesondere der erste und zweite Spriegel 2, 4 miteinander verriegelt.

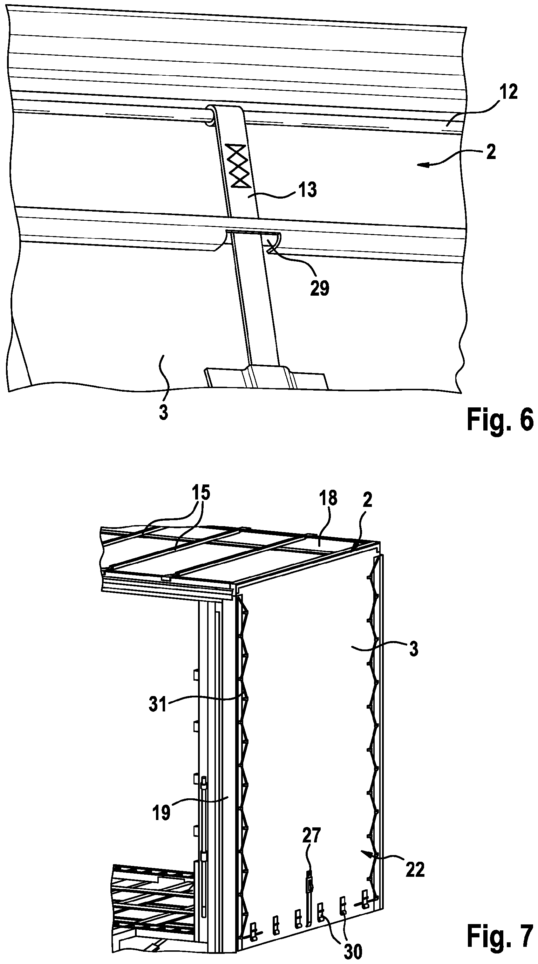

Fig. 6 eine Ansicht auf ein gespanntes Zugseil 12 einer Aktivierungseinrichtung der erfindungsgemäßen Spriegelkonstruktion, das sich an der Innenseite des ersten Spriegels 2 befindet. In diesem Fall wurde das Zugseil 12 zwischen zwei symmetrisch zueinander angeordneten Kopplungseinrichtungen (nicht sichtbar) gespannt. Sobald das Zugseil 12 ausgelenkt wird, insbesondere durch das Zugelement 13, werden die Kopplungsriegel (nicht sichtbar) aus den Aufnahmen gezogen und die Kopplungseinrichtungen entriegelt. Damit die Steuerung über das Zugelement 13 soweit unproblematisch und zuverlässig verläuft, existiert eine Führungsloch 29 im ersten Spriegel 2 für das Zugelement 13, damit eine Zugkraft gleichmäßig auf das Zugseil 12 gewirkt werden kann.

Fig. 7 eine Ansicht auf die Außenseite des Hecks der Wechselbrücke 14 mit verschlossener Heckplane 3, die an dem ersten Spriegel 2, den beiden Ecksäule 19 und dem Boden 21 jeweils mit der Heckplanenbefestigung 25, einem Befestigungsseil 31 im Zick-Zack-Muster und mit Befestigungsmitteln 30 befestigt ist. Das Zugelement 13 (nicht sichtbar) wird mittels eines Verriegelungsspanners 27 nach unten gezogen und gesichert, wodurch die Kopplungseinrichtungen (nicht sichtbar) der Spriegelkonstruktion entriegelt werden. Beim Öffnen der Heckplane 3 kann der Spanner 27 gelöst, das Zugelement und das Zugseil entspannt und der Kopplungsriegel in die Verriegelungsposition verschoben werden.

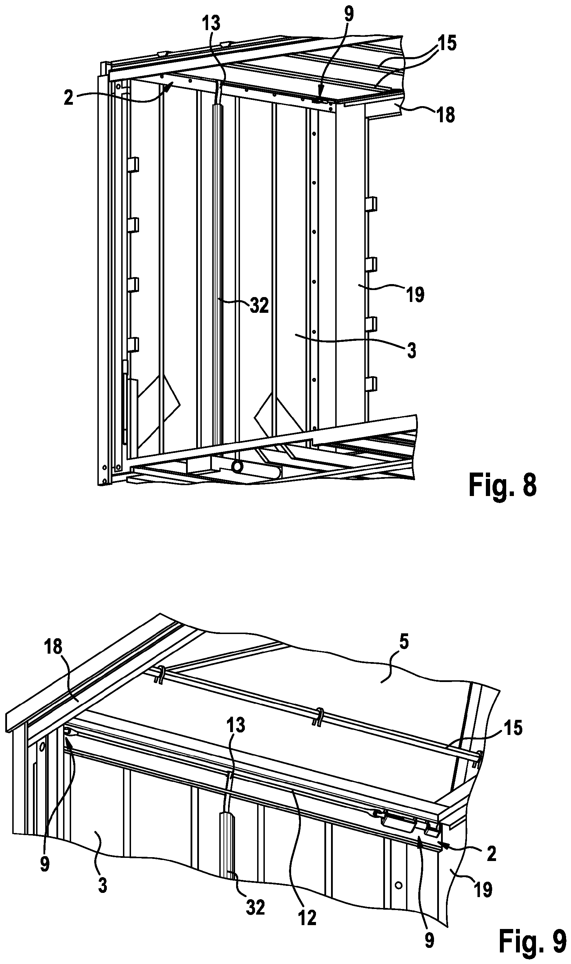

Während Fig. 7 die Außenseite des Hecks gezeigt hat, ist in Fig. 8 die Innenseite des Hecks der Wechselbrücke 14 mit verschlossener Heckplane 3 sichtbar. An dieser Seite ist ein Führungspfad 32 für das Zugelement 13 erkennbar, der an der Heckplane 3 ausgebildet ist und die Zugkraft des Zugelements 13 senkrecht nach oben auf das Zugseil 12 lenkt. Dadurch werden die symmetrisch angeordneten Aktivierungseinrichtungen 9 bzw. Kopplungseinrichtungen 7 gleichmäßig und gleichzeitig steuerbar.

Fig. 9 zeigt eine größere Teilansicht auf den Endspriegel 1, insbesondere den sichtbaren ersten Spriegel 2 aus Fig. 8. Neben der Heckplane 3 ist die Dachplane auf den Dachspriegeln 15 und dem Endspriegel 1 angeordnet.

### Bezugszeichenliste

- 1: Spriegelkonstruktion (Endspriegel am Heck)
- 2: Erster Spriegel
- 3: Heckplane
- 4: Zweiter Spriegel
- 5: Dachplane
- 6: Kopplungseinrichtung
- 7: Kopplungsriegel (Bolzen)
- 8: Kopplungsaufnahme
- 9: Aktivierungseinrichtung
- 10: Durchbruch
- 11: Federelement
- 12: Zugseil
- 13: Zugelement
- 14: Wechselbrücke
- 15: Dachspriegel
- 16: Endspriegel
- 17: Stützbein
- 18: Spriegelträger
- 19: Ecksäule
- 20: Runge
- 21: Boden/Rahmen
- 22: Heckladezugang
- 23: Kederführungsschiene
- 24: Dichtung/Kantenschutz
- 25: Befestigung für Heckplane
- 26: Riegelführungsmittel
- 27: Verriegelungsspanner (am Ende des Zugelements)
- 28: Haltemittel der Heckplanenbefestigung
- 29: Führungsloch für Zugelement
- 30: Befestigungsmittel für Heckplane
- 31: Befestigungsseil für Heckplane
- 32: Führungspfad für Zugelement
- 33: Vorderwand

## Patentansprüche

1. Spriegelkonstruktion (1) zum Tragen und Anheben von Abdeckungen bei Nutzfahrzeugen, Containern und/oder Anhängern,
mit einem ersten Spriegel (2) zum Verbinden mit einer Heckabdeckung (3), und mit einem zweiten Spriegel (4) zum Tragen einer Dachabdeckung (5), wobei der zweite Spriegel (4) ausgebildet ist, auf dem ersten Spriegel (2) angeordnet zu werden,
**gekennzeichnet durch**
mindestens eine Kopplungseinrichtung (6) zum Koppeln des ersten Spriegels (2) mit dem zweiten Spriegel (4), die einen Kopplungsriegel (7) und eine Kopplungsaufnahme (8) aufweist, wobei der Kopplungsriegel (7) mit einer Aktivierungseinrichtung (9) zum Verriegeln und Entriegeln des Kopplungsriegels mit/von der Kopplungsaufnahme (8) ausgebildet ist und wobei der zweite Spriegel (4) derart ausgebildet ist, dass dabei die Außenfläche des ersten Spriegels (2) vollständig abgedeckt ist.

2. Spriegelkonstruktion nach Anspruch 1,
**dadurch gekennzeichnet, dass**
der Kopplungsriegel (7) mit dem ersten Spriegel (2) verbunden ist und die Kopplungsaufnahme (8) am zweiten Spriegel (4) ausgebildet ist.

3. Spriegelkonstruktion nach Anspruch 1 oder 2,
**dadurch gekennzeichnet, dass**
die Aktivierungseinrichtung (9) durch ein Öffnen und Schließen der Heckabdeckung (3), insbesondere einer Heckplane und/oder einer Hecktürvorrichtung, steuerbar ist.

4. Spriegelkonstruktion nach einem der Ansprüche 1 bis 3,
**dadurch gekennzeichnet, dass**
ein Öffnen der Heckabdeckung (3) die mindestens eine Kopplungseinrichtung (6) verriegelt und ein Schließen der Heckabdeckung (3) die mindestens eine Kopplungseinrichtung (6) entriegelt.

5. Spriegelkonstruktion nach einem der Ansprüche 1 bis 4,
**dadurch gekennzeichnet, dass**
der erste Spriegel (2) mindestens einen Durchbruch (10) zum Aufnehmen der Kopplungsaufnahme (8) aufweist.

6. Spriegelkonstruktion nach einem der Ansprüche 1 bis 5,
**dadurch gekennzeichnet, dass**
der Kopplungsriegel (7) an einer Unterseite des ersten Spriegels (2) angeordnet ist.

7. Spriegelkonstruktion nach einem der Ansprüche 1 bis 6,
**dadurch gekennzeichnet, dass**
die Aktivierungseinrichtung (9) ein Federelement (11) zum Verriegeln des Kopplungsriegels (7) mit der Kopplungsaufnahme (8) und ein Zugseil (12) zum Entriegeln des Kopplungsriegels (7) aus der Kopplungsaufnahme (8) aufweist.

8. Spriegelkonstruktion nach Anspruch 7,
**gekennzeichnet durch**
zwei spiegelsymmetrisch angeordnete Kopplungseinrichtungen (6, 6'), wobei das eine Ende des Zugseils (12) mit dem einen Kopplungsriegel (7) und das andere Ende des Zugseils (12) mit dem anderen Kopplungsriegel (7') verbunden ist.

9. Spriegelkonstruktion nach Anspruch 8,
**dadurch gekennzeichnet, dass**
das Zugseil (12) derart ausgebildet ist, dass mindestens im gespannten und nicht ausgelenkten Zustand die Kopplungsriegel (7, 7') mit den jeweiligen Kopplungsaufnahmen (8, 8') verriegelt sind.

10. Spriegelkonstruktion nach einem der Ansprüche 7 bis 9,
**dadurch gekennzeichnet, dass**
das Zugseil (12) mit einem Zugelement (13) verbunden ist, wobei das Zugelement (13) derart ausgebildet ist, von einem Benutzer heruntergezogen und befestigt zu werden.

11. Aufbau für Nutzfahrzeuge, mit einer Spriegelkonstruktion (1) nach einem der vorhergehenden Ansprüche.

12. Wechselbrücke für Nutzfahrzeuge, mit einer Spriegelkonstruktion (1) nach einem der vorhergehenden Ansprüche.

13. Nutzfahrzeug mit einem Aufbau nach Anspruch 11 oder mit einer Wechselbrücke nach Anspruch 12.

## Claims

1. A roof arch structure (1) for supporting and lifting covers in commercial vehicles, containers and/or trailers,
having a first roof arch (2) for connection to a rear cover (3), and having a second roof arch (4) for supporting a roof cover (5), the second roof arch (4) being designed to be arranged on the first roof arch (2),
**characterised by**
at least one coupling device (6) for coupling the first roof arch (2) to the second roof arch (4), said coupling device having a coupling bolt (7) and a coupling socket (8), wherein the coupling bolt (7) is designed with an activation device (9) for locking and unlocking the coupling bolt into/out of the coupling socket (8), and wherein the second roof arch (4) is designed such that in the process the outer face of the first roof arch (2) is completely covered.

2. The roof arch structure according to Claim 1,
**characterised in that**
the coupling bolt (7) is connected to the first roof arch (2), and the coupling socket (8) is formed on the second roof arch (4).

3. The roof arch structure according to Claim 1 or 2,
**characterised in that**
the activation device (9) can be controlled by opening and closing the rear cover (3), in particular a rear tarpaulin and/or a rear door device.

4. The roof arch structure according to any one of Claims 1 to 3,
**characterised in that**
opening the rear cover (3) locks the at least one coupling device (6), and closing the rear cover (3) unlocks the at least one coupling device (6).

5. The roof arch structure according to any one of Claims 1 to 4,
**characterised in that**
the first roof arch (2) has at least one hole (10) for receiving the coupling socket (8).

6. The roof arch structure according to any one of Claims 1 to 5,
**characterised in that**
the coupling bolt (7) is arranged on an underside of the first roof arch (2).

7. The roof arch structure according to any one of Claims 1 to 6,
**characterised in that**
the activation device (9) has a spring element (11) for locking the coupling bolt (7) to the coupling socket (8) and a pull rope (12) for unlocking the coupling bolt (7) out of the coupling socket (8).

8. The roof arch structure according to Claim 7,
**characterised by**
two coupling devices (6, 6') arranged mirror-symmetrically, wherein one end of the pull rope (12) is connected to one coupling bolt (7), and the other end of the pull rope (12) is connected to the other coupling bolt (7').

9. The roof arch structure according to Claim 8,
**characterised in that**
the pull rope (12) is designed such that, at least when it is in the tensioned and non-deflected state, the coupling bolts (7, 7') are locked in the respective coupling sockets (8, 8').

10. The roof arch structure according to any one of Claims 7 to 9,
**characterised in that**
the pull rope (12) is connected to a pulling element (13), wherein the pulling element (13) is designed so as to be pulled down and fastened by a user.

11. A superstructure for commercial vehicles, having a roof arch structure (1) according to any one of the preceding claims.

12. A swap body for commercial vehicles, having a roof arch structure (1) according to any one of the preceding claims.

13. A commercial vehicle having a superstructure according to Claim 11 or a swap body according to Claim 12.

## Revendications

1. Structure en arceau (1), destinée à porter et à relever des capots de véhicules utilitaires, de conteneurs et/ou de remorques,
pourvue d'un premier arceau (2), destiné à être assemblé avec un capot arrière (3), et d'un deuxième arceau (4), destiné à porter un capot de toiture (5), le deuxième arceau (4) étant conçu pour être placé sur le premier arceau (2),
**caractérisée par**
au moins un système d'accouplement (6), destiné à accoupler le premier arceau (2) avec le deuxième arceau (4), qui comporte un verrou d'accouplement (7) et un logement d'accouplement (8), le verrou d'accouplement (7) étant conçu avec un système d'activation (9) destiné à verrouiller et à déverrouiller le verrou d'accouplement avec le/du logement d'accouplement (8) et le deuxième arceau (4) étant conçu de telle sorte, qu'à cet effet, la surface extérieure du premier arceau (2) soit totalement recouverte.

2. Structure en arceau selon la revendication 1,
**caractérisée en ce que**
le verrou d'accouplement (7) est assemblé avec le premier arceau (2) et le logement d'accouplement (8) est conçu sur le deuxième arceau (4).

3. Structure en arceau selon la revendication 1 ou 2,
**caractérisée en ce que**
le système d'activation (9) est susceptible d'être commandé par une ouverture et une fermeture du capot arrière (3), notamment d'une bâche arrière et/ou d'un dispositif de hayon arrière.

4. Structure en arceau selon l'une quelconque des revendications 1 à 3,
**caractérisée en ce**
**qu'**une ouverture du capot arrière (3) verrouille l'au moins un système d'accouplement (6) et une fermeture du capot arrière (3) déverrouille l'au moins un système d'accouplement (6).

5. Structure en arceau selon l'une quelconque des revendications 1 à 4,
**caractérisée en ce que**
le premier arceau (2) comporte au moins un ajour (10), destiné à recevoir le logement d'accouplement (8).

6. Structure en arceau selon l'une quelconque des revendications 1 à 5,
**caractérisée en ce que**
le verrou d'accouplement (7) est placé sur une face inférieure du premier arceau (2).

7. Structure en arceau selon l'une quelconque des revendications 1 à 6,
**caractérisée en ce que**
le système d'activation (9) comporte un élément à ressort (11), destiné à verrouiller le verrou d'accouplement (7) avec le logement d'accouplement (8) et un câble de traction (12), destiné à déverrouiller le verrou d'accouplement (7) du logement d'accouplement (8).

8. Structure en arceau selon la revendication 7,
**caractérisée par**
deux systèmes d'accouplement (6, 6'), placés en symétrie spéculaire, l'une des extrémités du câble de traction (12) étant verrouillée avec l'un (7) des verrous d'accouplement et l'autre extrémité du câble de traction (12) étant verrouillée avec l'autre verrou d'accouplement (7').

9. Structure en arceau selon la revendication 8,
**caractérisée en ce que**
le câble de traction (12) est conçu de telle sorte qu'au moins en position tendue et non déviée, les verrous d'accouplement (7, 7') soient verrouillés avec les logements d'accouplement (8, 8').

10. Structure en arceau selon l'une quelconque des revendications 7 à 9,
**caractérisée en ce que**
le câble de traction (12) est relié avec un élément de traction (13), l'élément de traction (13) étant conçu de sorte à être tiré vers le bas et fixé par un utilisateur.

11. Carrosserie pour véhicules utilitaires, pourvue d'une structure en arceau (1) selon l'une quelconque des revendications précédentes.

12. Pont amovible pour véhicules utilitaires, pourvu d'une structure en arceau (1) selon l'une quelconque des revendications précédentes.

13. Véhicule utilitaire, pourvu d'une carrosserie selon la revendication 11 ou d'un pont amovible selon la revendication 12.
